# EUROPÄISCHE PATENTSCHRIFT

(11) **EP 2 955 135 B1**
(45) Veröffentlichungstag und Bekanntmachung des Hinweises auf die Patenterteilung: **07.04.2021**
(21) Anmeldenummer: 15166753.2
(22) Anmeldetag: 07.05.2015
(51) Int. Cl.: B65H 5/00, B65G 61/00, B65B 35/30, B65B 25/14, B65G 59/02

(54) **SYSTEM ZUM ABTRANSPORT VON GUTSTAPELN, DIE AUS PALETTEN MIT DARAUF GESTAPELTEN GÜTERN BESTEHEN, SOWIE VERFAHREN ZUM ABTRANSPORT VON GUTSTAPELN, DIE AUS PALETTEN MIT DARAUF GESTAPELTEN GÜTERN BESTEHEN**
SYSTEM FOR DISCHARGING OF PILES OF MERCHANDISE COMPRISING PALLETS WITH GOODS STACKED ON THEM, AND METHOD FOR DISCHARGING PILES OF MERCHANDISE COMPRISING PALLETS WITH GOODS STACKED ON THEM
SYSTÈME DE TRANSPORT DE PILES DE MARCHANDISES COMPOSÉES DE PALETTES COMPRENANT DES MARCHANDISES EMPILÉES ET PROCÉDÉ DE TRANSPORT DE PILES DE MARCHANDISES COMPOSÉES DE PALETTES COMPRENANT DES MARCHANDISES EMPILÉES

(30) Priorität: 15.05.2014 DE 202014102298 U
(43) Veröffentlichungstag der Anmeldung: 16.12.2015
(73) Patentinhaber: MSK-Verpackungs-Systeme Gesellschaft mit beschränkter Haftung, 47533 Kleve (DE)
(72) Erfinder: Hannen, Reiner, 47546 Kalkar-Wissel (DE); Michels, Frank, 47533 Kleve (DE)
(74) Vertreter: Dr. Stark & Partner Patentanwälte mbB

(56) Entgegenhaltungen:
- DE-U1- 20 122 255
- US-A- 4 988 264
- US-A- 5 746 572
- US-A1- 2011 130 868
- US-A1- 2013 248 325

## Beschreibung

Die Erfindung betrifft ein System zum Abtransport von Gutstapeln, die aus Paletten mit darauf gestapelten Gütern, nämlich mit darauf gestapelten Papier- oder Kartonstapeln, bestehen, wobei das System zumindest zwei Zuführlinien für die Gutstapel umfasst, die in eine Transportrichtung laufend ausgebildet und deren Endbereiche seitlich nebeneinander angeordnet sind, und wobei jede Zuführlinie in Transportrichtung gesehen mit Gruppen an Gutstapeln endet, wobei jede Gruppe aus zumindest zwei Gutstapeln besteht, die quer zur Transportrichtung im Endbereich nebeneinander angeordnet sind und wobei die Paletten und/oder die darauf gestapelten Güter zueinander in einem geringen Abstand, insbesondere sich teilweise berührend, angeordnet sind, und zumindest eine Anlage zum jeweils einzelnen Verpacken zumindest der auf den Paletten befindlichen Güter umfasst.

In der Papierindustrie bestehen üblicherweise mehrere Zuführlinien, die parallel nebeneinander verlaufend angeordnet sind. In der Zuführlinie wird eine Papierbahn, die eine Breite von bis zu 10 m aufweisen kann, von einer Rolle abgewickelt. In einem Querschneider, der sowohl längs als auch quer zur Transportrichtung ausgerichtete Messer aufweist, wird die Papierbahn in einzelne Papiere zerschnitten. In Transportrichtung gesehen hinter dem Querschneider ist eine an die Gesamtbreite der zerschnittenen Papierbahn angepasste Anzahl an nebeneinander angeordneten Paletten aufgestellt, wobei sich benachbarte Paletten berühren. Auf diesen Paletten werden die zerschnittenen Papiere abgelegt. Hat eine Gruppe an Paletten die maximale Stapelhöhe erreicht, müssen die Gutstapel, d. h. die nebeneinander angeordneten Paletten mit den darauf befindlichen Papier- oder Kartonstapeln abtransportiert werden Dokument DE 201 22 255 U1 offenbart ein System und ein Verfahren zum Abtransport von Gutstapeln, die aus Paletten mit darauf gestapelten Gütern, nämlich mit darauf gestapelten Papier- oder Kartonstapeln, bestehen. Dieses System umfasst mehrere Zuführlinien, eine Quertransporteinrichtung und eine Übergabestation.

In der Praxis überlappen sich die Blätter einer Gruppe teilweise. Dies ist insbesondere dann der Fall, wenn beispielsweise der Papier- oder Kartonstapel etwas versetzt zu seiner Palette angeordnet ist. Sofern die Gutstapel einer Gruppe einzeln abtransportiert werden sollen, muss insoweit mit dem Abtransport der jeweils äußeren Palette einer Gruppe begonnen werden. Dies erfolgt bisher manuell oder mit einer Hubeinrichtung. Ein solcher Abtransport ist insoweit zeitaufwendig, umständlich und auch störanfällig.

Es sind auch Übersetzer bekannt, die im Bereich ihrer Oberfläche einerseits Rollen zum Transport eines Gutes in die eine Richtung und andererseits Kettenstränge aufweisen, die einen Transport in eine 90°-Richtung zu den Rollen erlauben. Je nach der gewünschten Transportrichtung werden beispielsweise die Rollen angehoben oder abgesenkt. Da aber insbesondere in der Papierindustrie Paletten mit lediglich vier unterseitigen Eckklötzen eingesetzt werden, ist ein Abtransport mittels Umsetzern kaum möglich, da für einen Transport mittels der Rollen die stützende Wirkung zwischen den Eckklötzen fehlt. Im Übrigen sind Umsetzer aufgrund der feststehenden Abstände zwischen den Rollen und den Förderketten in aller Regel auf einen bestimmten Palettentyp und eine bestimmte Palettenabmessung festgelegt.

Aufgabe der Erfindung ist es, die vorgenannten Nachteile zu vermeiden und ein System anzugeben, das auch bei wechselnden Palettenformaten und/oder Palettenabmessungen einen schnellen und einfachen Abtransport der Gutstapel von den Zuführlinien zum Zwecke der späteren einzelnen Verpackung ermöglicht.

Diese Aufgabe wird dadurch gelöst, dass eine Transporteinrichtung vorgesehen ist, die in jeweils an die Endbereiche der Zuführlinien angrenzende Positionen für die Übernahme der kompletten Gruppe von dieser Zuführlinie seitlich verfahrbar ist, und dass weiterhin eine Übergabestation vorgesehen ist, die eine Zuführeinrichtung, eine Hebeeinrichtung und eine Abführeinrichtung umfasst, wobei die Transporteinrichtung weiterhin zu der Zuführeinrichtung oder zu einem zwischengeschalteten weiteren Transportmedium zur Übergabe der kompletten Gruppe an die Zuführeinrichtung bzw. zur Übergabe an das weitere Transportmedium seitlich verfahrbar ist, und wobei die Hebeeinrichtung für die Übergabe entweder eines Gutstapels einer Gruppe oder gleichzeitig mehrerer, insbesondere aller, Gutstapel einer Gruppe von der Zuführeinrichtung an die Abführeinrichtung ausgebildet ist und wobei für den Fall der Übergabe einer kompletten Gruppe die Abführeinrichtung zwei unabhängig voneinander antreibbare und in einer Linie hintereinander geschaltete Förderbänder umfasst, welche zur Vereinzelung der Paletten, d. h. der Gutstapel, unabhängig voneinander steuerbar sind.

Das erfindungsgemäße System erlaubt einen schnellen Abtransport, da die komplette Gruppe an Gutstapeln einer Zuführlinie gleichzeitig übernommen und durch leere Paletten ersetzt wird. Die Palettenformate und/oder Palettenabmessungen können zwischen den Zuführlinien variieren. So kann die Gruppe einer Zuführlinie beispielsweise aus vier Gutstapeln bestehen, während die Gruppe der benachbarten Zuführlinie aus fünf Gutstapeln besteht oder die Gutstapel ein anderes Palettenformat und/oder eine andere Palettenabmessung aufweisen.

Die von der Transporteinrichtung übernommene Gruppe an Gutstapeln kann entweder direkt an die Zuführeinrichtung übergeben werden. Selbstverständlich ist es aber auch möglich, dass zwischen der Transporteinrichtung und der Zuführeinrichtung noch ein weiteres Transportmedium, wie z. B. ein Förderband, dessen Verfahrrichtung fluchtend mit der Transportrichtung der Zuführlinien ausgebildet ist, vorgesehen ist.

Unter einem geringen Abstand zwischen benachbarten Paletten und/oder darauf gestapelten Güter wird ein Abstand von weniger als 10 cm, insbesondere weniger als 5 cm, verstanden. Unter einem seitlichen Verfahren wird eine Verfahrrichtung verstanden, die parallel zur Anordnung der zu übergebenden Gruppe an Paletten und damit orthogonal zur Transportrichtung innerhalb der Zuführlinie ausgerichtet ist.

Unter einem Förderband werden sämtliche Fördereinrichtungen und damit beispielsweise auch Rollen- oder Kettenförderer verstanden. In der nachgeschalteten Anlage zum jeweils einzelnen Verpacken mittels einer Folie werden zumindest die auf der Palette befindlichen Güter verpackt. Es ist selbstverständlich auch möglich, dass die Verpackung zumindest die Seiten der Palette mitumfasst.

Dabei kann die Transporteinrichtung entweder als Shuttlewagen mit einem Förderband, dessen Verfahrrichtung fluchtend mit der Transportrichtung der Zuführlinien ausgebildet ist, oder aber als Förderband bzw. als Kran ausgebildet sein. Sofern die Transporteinrichtung als Shuttlewagen ausgebildet ist, ist dieser beispielsweise auf Schienen verfahrbar gelagert. Im Bereich der Oberseite weist der Shuttlewagen ein orthogonal zur Verfahrrichtung des Shuttlewagens antreibbares Förderband auf. Damit kann die Gruppe im Bereich des Endes der Zuführlinie übernommen und auf dem Shuttlewagen in Richtung der Transportrichtung der Zuführlinie bewegt werden.

Das weitere Transportmedium und/oder die Zuführeinrichtung und/oder die Abführeinrichtung und/oder der Endbereich zumindest einer Zuführlinie kann (können) jeweils als Förderband ausgebildet sein.

Insbesondere für eine Übergabe einer kompletten Gruppe bietet sich an, wenn das in der generellen Transportrichtung gesehen erste Förderband der Abführeinrichtung als Drehtischförderband oder als Drehschiebeförderer ausgebildet ist. Ein Drehtischförderband ist im Vergleich zu einem Förderband drehbar gegenüber dem Untergrund gelagert. Damit kann eine komplette Gruppe oder ein einzelner Gutstapel gedreht werden. Sofern ein Drehen erforderlich ist, wird das Drehtischförderband zunächst in eine Ausrichtung gedreht, die 90° zur beabsichtigten Transportrichtung ist, und die Palette bzw. die Gruppe auf das Drehtischförderband abgesetzt. Dann wird das Drehtischförderband wieder um 90° gedreht und die komplette Gruppe oder auch der einzelne Gutstapel in der Transportrichtung weitertransportiert.

Es ist auch möglich, dass das in der generellen Transportrichtung gesehen zweite Förderband der Abführeinrichtung als Drehtischförderband ausgebildet ist.

Als Hebeeinrichtung kann ein, insbesondere auf Schienen, verfahrbarer Kran vorgesehen sein.

Die Hebeeinrichtung kann zumindest einen Gabelträger mit zumindest zwei Zinken, die in Eingriff mit der (den) anzuhebenden Palette(n) der Gutstapel bringbar sind, aufweisen.

Die Hebeeinrichtung kann zwei gegenüberliegend angeordnete und aufeinander zu bewegbare Gabelträger aufweisen, wobei jeder Gabelträger eine an die Anzahl an anzuhebenden Paletten der Gutstapel angepasste Anzahl an Zinken aufweist und wobei die Zinken der Gabelträger von beiden Seiten in die Paletten eingreifen. Es bietet sich an, dass beispielsweise beim Anheben von fünf Gutstapeln insgesamt zehn Zinken je Gabelträger vorgesehen sind, die dann in die entsprechenden Zwischenräume zwischen den Eckklötzen der Paletten eingreifen.

Die Hebeeinrichtung kann zusätzlich eine Einrichtung zum Drehen eines angehobenen Gutstapels einer Gruppe oder zum gemeinsamen Drehen der aus mehreren, insbesondere allen, angehobenen Gutstapeln einer Gruppe bestehenden Gesamtheit aufweisen. Eine solche Einrichtung kann in der Hebeeinrichtung integriert sein, so dass damit während des Hebevorgangs auch ein Drehen eines Gutstapels oder der Gruppe möglich ist.

Die Hebeeinrichtung kann eine Einrichtung aufweisen, die beim Einführen wenigstens eines Zinkens eines Gabelträgers eine Kollision mit einem Widerstand detektiert und insbesondere mit einer Steuereinrichtung verbunden ist, welche dazu ausgebildet ist, ein weiteres Einführen des kollidierenden Zinkens oder aller Zinken zu unterbinden und vorzugsweise ein Rückfahren beispielsweise des kollidierenden Zinkens zu initiieren. Wird ein Widerstand detektiert, da beispielsweise eine Zinke beim Einführen in eine Palette gegen einen Eckklotz stößt, kann beispielsweise eine Störmeldung ausgegeben werden. Selbstverständlich kann auch eine Unterbrechung des weiteren Einführgangvorgangs der Zinken erfolgen. Auch ist es denkbar, dass die betreffende Zinke hoch- oder weggeklappt wird.

Die Hebeeinrichtung kann eine Detektionseinrichtung aufweisen, die vor oder beim Einführen wenigstens eines Zinkens eines Gabelträgers eine bevorstehende Kollision mittels einer berührungslos arbeitenden Messeinrichtung detektiert und insbesondere mit einer Steuereinrichtung verbunden ist, welche dazu ausgebildet ist, ein Einführen bzw. ein weiteres Einführen des kollidierenden Zinkens oder aller Zinken zu unterbinden und vorzugsweise ein Rückfahren eines bereits teilweise eingeführten Zinkens, der zu kollidieren droht, zu initiieren. Bei der Messeinrichtung kann es sich beispielsweise um eine optische Erfassungseinrichtung, ein Ultraschallgerät, einen Laser oder dergleichen handeln.

Zumindest ein Zinken eines Gabelträgers kann gegen eine in Einführrichtung wirkende Kraft, insbesondere gegen eine Federkraft, bei einer Kollision, beispielsweise mit einem Eckklotz an der Palettenunterseite, gegen diese Kraft, insbesondere gegen diese Federkraft relativ zu dem Gabelträger entgegen der Einführrichtung verlagerbar ausgebildet sein. Während der Gabelträger damit weiter in Einführrichtung verlagerbar ist, bleibt die Position jedes kollidierenden Zinkens in Bezug auf die Palette unverändert, während die anderen Zinken weiter in die Freiräume der Palette bewegt werden können.

Es bietet sich an, wenn die Position zumindest einer Zinke zur Anpassung an die anzuhebende Palette horizontal veränderbar ist. Die Veränderung kann manuell erfolgen. Es ist aber auch eine Veränderung durch einen Antrieb denkbar. Selbstverständlich ist es auch möglich, dass der Antrieb mit einer Steuereinrichtung verbunden ist, so dass bei Detektion einer bevorstehenden Kollision mittels einer berührungslos arbeitenden Messeinrichtung die Position der Zinke, die zu kollidieren droht, verändert wird. Damit kann beispielsweise ein Gabelträger, der eine Vielzahl an Zinken aufweist, an beliebig ausgestaltete Palettentypen und Palettenabmessungen angepasst werden.

Die Erfindung betrifft auch ein Verfahren zum Abtransport von Gutstapeln, die aus Paletten mit darauf gestapelten Gütern, nämlich mit darauf gestapelten Papier- oder Kartonstapeln, bestehen, von zumindest zwei Zuführlinien zum Zwecke eines späteren einzelnen Verpackens der Gutstapel, wobei die Zuführlinien in einer Transportrichtung laufend ausgebildet und deren Endbereiche seitlich nebeneinander angeordnet sind, und wobei jede Zuführlinie in Transportrichtung gesehen mit Gruppen an Gutstapeln endet, wobei jede Gruppe aus zumindest zwei Gutstapeln besteht, die quer zur Transportrichtung im Endbereich nebeneinander angeordnet sind und wobei die Paletten und/oder die darauf gestapelten Güter zueinander in einem geringen Abstand, insbesondere sich teilweise berührend, angeordnet sind.

In der Papierindustrie bestehen üblicherweise mehrere Zuführlinien, die parallel nebeneinander verlaufend angeordnet sind. In der Zuführlinie wird eine Papierbahn, die eine Breite von bis zu 10 m aufweisen kann, von einer Rolle abgewickelt. In einem Querschneider, der sowohl längs als auch quer zur Transportrichtung ausgerichtete Messer aufweist, wird die Papierbahn in einzelne Papiere zerschnitten. In Transportrichtung gesehen hinter dem Querschneider ist eine an die Gesamtbreite der zerschnittenen Papierbahn angepasste Anzahl an nebeneinander angeordneten Paletten aufgestellt, wobei sich benachbarte Paletten berühren. Auf diesen Paletten werden die zerschnittenen Papiere abgelegt. Hat eine Gruppe an Paletten die maximale Stapelhöhe erreicht, müssen die Gutstapel, d. h. die nebeneinander angeordneten Paletten mit den darauf befindlichen Papier- oder Kartonstapeln abtransportiert werden.

In der Praxis überlappen sich die Blätter einer Gruppe teilweise. Dies ist insbesondere dann der Fall, wenn beispielsweise der Papier- oder Kartonstapel etwas versetzt zu seiner Palette angeordnet ist. Sofern die Gutstapel einer Gruppe einzeln abtransportiert werden sollen, muss insoweit mit dem Abtransport der jeweils äußeren Palette einer Gruppe begonnen werden. Dies erfolgt bisher manuell oder mit einer Hubeinrichtung. Ein solcher Abtransport ist insoweit zeitaufwendig, umständlich und auch störanfällig.

Es sind auch Übersetzer bekannt, die im Bereich ihrer Oberfläche einerseits Rollen zum Transport eines Gutes in die eine Richtung und andererseits Kettenstränge aufweisen, die einen Transport in eine 90°-Richtung zu den Rollen erlauben. Je nach der gewünschten Transportrichtung werden beispielsweise die Rollen angehoben oder abgesenkt. Da aber insbesondere in der Papierindustrie Paletten mit lediglich vier unterseitigen Eckklötzen eingesetzt werden, ist ein Abtransport mittels Umsetzern kaum möglich, da für einen Transport mittels der Rollen die stützende Wirkung zwischen den Eckklötzen fehlt. Im Übrigen sind Umsetzer aufgrund der feststehenden Abstände zwischen den Rollen und den Förderketten in aller Regel auf einen bestimmten Palettentyp und eine bestimmte Palettenabmessung festgelegt.

Aufgabe der Erfindung ist es, die vorgenannten Nachteile zu vermeiden und ein Verfahren anzugeben, das auch bei wechselnden Palettenformaten und/oder Palettenabmessungen einen schnellen und einfachen Abtransport der Gutstapel von den Zuführlinien zum Zwecke der späteren einzelnen Verpackung ermöglicht.

Diese Aufgabe wird dadurch gelöst, dass eine Transporteinrichtung vorgesehen ist, die in jeweils an die Endbereiche der Zuführlinien angrenzende Positionen für die Übernahme der kompletten Gruppe von dieser Zuführlinie seitlich verfahren wird, und dort die komplette Gruppe von dieser Zuführlinie übernimmt und dass weiterhin eine Übergabestation vorgesehen ist, die eine Zuführeinrichtung, eine Hebeeinrichtung und eine Abführeinrichtung umfasst, wobei die Transporteinrichtung weiterhin zu der Zuführeinrichtung oder zu einem zwischengeschalteten weiteren Transportmedium zur Übergabe der kompletten Gruppe an die Zuführeinrichtung bzw. zur Übergabe an das weitere Transportmedium seitlich verfahren wird und die übernommene Gruppe zu der Zuführeinrichtung der Übergabestation oder zu dem weiteren Transportmedium weiter transportiert wird, wobei die Hebeeinrichtung anschließend entweder einen Gutstapel einer Gruppe oder gleichzeitig mehrere, insbesondere alle, Gutstapel einer Gruppe von der Zuführeinrichtung an die Abführeinrichtung übergibt und wobei für den Fall der Übergabe einer kompletten Gruppe die Abführeinrichtung zwei unabhängig voneinander antreibbare und in einer Linie hintereinander geschaltete Förderbänder umfasst, so dass die Gutstapel der Gruppe vereinzelt werden, indem die komplette Gruppe durch Antreiben beider hintereinander geschalteter Förderbänder solange weitertransportiert wird, bis der in der generellen Transportrichtung gesehen erste Gutstapel von dem zweiten Förderband übernommen worden ist und dann die Geschwindigkeit des in der generellen Transportrichtung gesehen ersten Förderbandes, insbesondere bis zum Stillstand, reduziert wird.

Dabei kann als Transporteinrichtung entweder ein Shuttlewagen mit einem Förderband, dessen Verfahrrichtung fluchtend mit der Transportrichtung der Zuführlinien ausgebildet ist, oder aber ein Förderband bzw. ein Kran verwendet werden.

Als weiteres Transportmedium und/oder als Zuführeinrichtung und/oder als Abführeinrichtung und/oder als Endbereich zumindest einer Zuführlinie kann jeweils ein Förderband verwendet werden.

Insbesondere für die Übergabe einer kompletten Gruppe bietet es sich an, wenn als in der generellen Transportrichtung gesehen erstes Förderband der Abführeinrichtung ein Drehtischförderband verwendet wird.

Es ist auch möglich, dass als in der generellen Transportrichtung gesehen zweites Förderband der Abführeinrichtung ein Drehtischförderband verwendet wird.

Dabei kann eine Hebeeinrichtung eingesetzt werden, die eine Einrichtung aufweist, die beim Einführen wenigstens eines Zinkens eines Gabelträgers eine Kollision mit einem Widerstand detektiert und eine mit der Einrichtung verbundene Steuereinrichtung ein weiteres Einführen des kollidierenden Zinkens oder aller Zinken unterbindet und vorzugsweise ein Rückfahren initiiert. Dabei kann (können) nur die kollidierende Zinke oder alle Zinken oder auch der komplette Gabelträger rückgefahren werden.

Dabei kann eine Hebeeinrichtung eingesetzt werden, die eine Detektionseinrichtung aufweist, die vor oder beim Einführen wenigstens eines Zinkens eines Gabelträgers eine bevorstehende Kollision mittels einer berührungslos arbeitenden Messeinrichtung detektiert und eine mit der Detektionseinrichtung verbundene Steuereinrichtung ein Einführen bzw. ein weiteres Einführen des kollidierenden Zinkens oder aller Zinken unterbindet und vorzugsweise ein Rückfahren eines bereits teilweise eingeführten Zinkens, der zu kollidieren droht, initiiert. Bei der Messeinrichtung kann es sich beispielsweise um eine optische Erfassungseinrichtung, ein Ultraschallgerät, einen Laser oder dergleichen handeln.

Im Folgenden werden in den Zeichnungen dargestellte Ausführungsbeispiele der Erfindung erläutert. Es zeigen:
- Fig. 1: ein erstes Ausführungsbeispiel der Erfindung und
- Fig. 2: ein zweites Ausführungsbeispiel der Erfindung.

In allen Figuren werden für gleiche bzw. gleichartige Bauteile übereinstimmende Bezugszeichen verwendet.

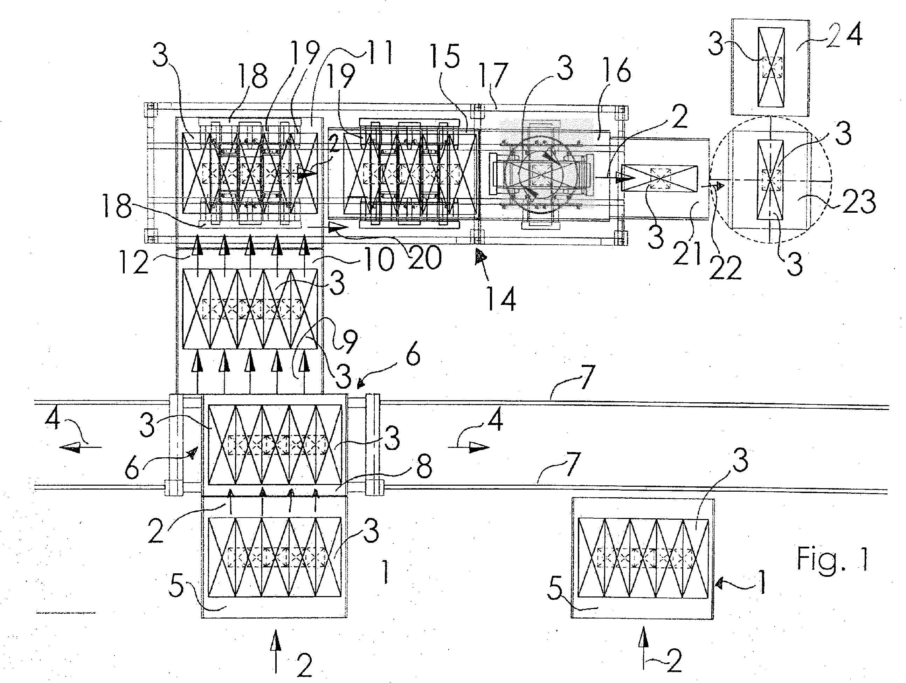

In Fig. 1 ist ein Ausführungsbeispiel dargestellt, das insgesamt zwei Zuführlinien 1 aufweist. In jeder der nicht näher dargestellten Zuführlinien 1 wird eine Papierbahn, die eine Breite von bis zu 10 m aufweisen kann, von einer Rolle abgewickelt. In einem Querschneider, der sowohl längs als auch quer zur Transportrichtung ausgerichtete Messer aufweist, wird die Papierbahn in einzelne Papiere zerschnitten. In Transportrichtung (Pfeil 2) gesehen hinter dem Querschneider ist eine an die Gesamtbreite der zerschnittenen Papierbahn angepasste Anzahl an nebeneinander angeordneten Paletten aufgestellt, wobei sich benachbarte Paletten berühren.

Von der jeweiligen Zuführlinie 1 sind lediglich die Bereiche dargestellt, in denen die bereits mit Papier- oder Kartonstapeln gestapelten Paletten, d. h. die Gutstapel 3, angeordnet sind. In dem dargestellten Ausführungsbeispiel umfasst jede Gruppe insgesamt fünf Gutstapel 3, die jeweils mit einem Kreuz gekennzeichnet sind. Die kleinen Kästchen mit dem Kreuz sollen dabei Gutstapel 3 der geringsten möglichen Abmessungen und die größeren rechteckigen Kästchen mit dem Kreuz die Gutstapel 3 mit den größtmöglichen Abmessungen verdeutlichen.

Unter einem seitlichen Verfahren wird eine Verfahrrichtung 4 verstanden, die parallel zur Anordnung der zu übergebenden Gruppe an Gutstapeln 3 und damit orthogonal zur Transportrichtung 2 innerhalb der Zuführlinie 1 ausgerichtet ist.

In dem jeweiligen Endbereich 5 beider Zuführlinien 1 ist eine Transporteinrichtung 6 vorgesehen, die seitlich zu der Zuführlinie 1, bei der eine Übernahme der Gruppe der Gutstapel 3 ansteht, für die Übernahme der kompletten Gruppe von dieser Zuführlinie 1 in Richtung des Pfeils 4 verfahrbar ist. Bei dieser Transporteinrichtung 6 handelt es sich in dem dargestellten Ausführungsbeispiel um einen Shuttlewagen, der auf Schienen 7 verfahrbar ist.

Im Bereich der Oberseite weist der Shuttlewagen ein Förderband 8 auf, das einen Transport von der, in dem dargestellten Ausführungsbeispiel, linken Zuführlinie 1 in Richtung der Pfeile 9 erlaubt. Die Transportvorrichtung 2 übergibt die komplette Gruppe an Gutstapeln 3 in dem dargestellten Ausführungsbeispiel an ein zwischengeschaltetes weiteres Transportmedium 10, das wiederum als Förderband ausgebildet ist.

Das weitere Transportmedium 10 wiederum übergibt die komplette Gruppe an eine Zuführeinrichtung 11 einer Übergabestation. Dies ist deshalb möglich, da die Zuführeinrichtung 11 ihrerseits aus einem Förderband besteht, das eine Bewegung in Richtung der Pfeile 12 ermöglicht.

Auf diese Weise wird die komplette Gruppe in unveränderter Richtung von dem Endbereich 5 der Zuführlinie 1, über die Transporteinrichtung 2, über das weitere Transportmedium 10 zu der Zuführeinrichtung 11 der Übergabestation transportiert. Damit ist von dem Endbereich 5 der Zuführlinie 2 bis zur Zuführeinrichtung 11 die generelle Transportrichtung der Gruppe unverändert geblieben.

Neben der Zuführeinrichtung 11 umfasst die Übergabestation eine Hebeeinrichtung 13 und weiterhin eine Abführeinrichtung 14. Die Abführeinrichtung 14 umfasst zwei unabhängig voneinander antreibbare und in einer Linie hintereinander geschaltete Förderbänder 15, 16. Die Hebeeinrichtung 13 besteht in dem darstellten Ausführungsbeispiel aus einem auf Schienen 17 verfahrbaren Kran. Die Hebeeinrichtung 13 weist zwei gegenüberliegend angeordnete und aufeinander zu bewegbare Gabelträger 18 auf, wobei jeder Gabelträger 18 eine an die Anzahl an anzuhebenden Paletten der Gutstapel 3 angepasste Anzahl an Zinken 19 aufweist und wobei die Zinken 19 der Gabelträger 18 von beiden Seiten in die Paletten eingreifen.

In dem in Fig. 1 dargestellten Ausführungsbeispiel weist jeder Gabelträger 18 sieben Zinken 19 auf, die mit den anzuhebenden Paletten der Gruppe in Eingriff bringbar sind. Nach dem in Eingriff bringen wird die komplette Gruppe an Gutstapeln 3 angehoben, und die Hebeeinrichtung 13 wird in Richtung des Pfeils 20 verfahren.

Dann wird die Gruppe an Gutstapeln 3 auf das in der generellen Transportrichtung 2 gesehen erste Förderband 15 abgesetzt. Da die Förderbänder 15, 16 der Abführeinrichtung 14 unabhängig voneinander antreibbar und in einer Linie hintereinander geschaltet sind, ist eine Vereinzelung der Gruppe möglich, indem die komplette Gruppe durch Antreiben beider hintereinander geschalteter Förderbänder 15, 16 solange weitertransportiert wird, bis der in der generellen Transportrichtung 2 gesehen erste Gutstapel 3 von dem in der generellen Transportrichtung 2 gesehen zweiten Förderband 16 übernommen worden ist. Dann wird die Geschwindigkeit des ersten Förderbandes 15, insbesondere bis zum Stillstand, zur Vereinzelung reduziert und anschließend wieder erhöht.

Das zweite Förderband 15 ist in Fig. 1 als Drehtischförderband ausgebildet, so dass die nunmehr vereinzelten Gutstapel 3 bei Bedarf noch gedreht werden können. Es umfasst nicht dargestellte Zinken, die in Eingriff mit den Paletten der Gruppe bringbar sind. Die Zinken werden angehoben, und die Gutstapel 3 werden dann gemeinsam gedreht. Nach dem Drehen wird die Palette wieder abgesenkt und die Zinken entfernt. Die beiden Förderbänder 15, 16 der Abführeinrichtung 14 erlauben einen Weitertransport in Richtung der generellen Transportrichtung 2, die sich im Bereich der Zuführeinrichtung 11 um 90° geändert hat.

Bei dem in Fig. 1 dargestellten Ausführungsbeispiel schließt sich an das zweite Förderband 16 noch ein weiteres Förderband 21 an, das einen Weitertransport in Richtung des Pfeils 22 ermöglicht. Es schließt sich ein Drehschiebeförderer 23 an, der eine Änderung der Transportrichtung ermöglicht, so dass der Gutstapel 3 an ein weiteres Förderband 24 übergeben werden kann. Zum Verdrehen wird der Drehschiebeförderer 23 etwas verlagert, so dass anschließend die Drehbewegung erfolgen kann. Anschließend wird der Drehschiebeförderer 23 wieder in seine ursprüngliche Position zurückverlagert.

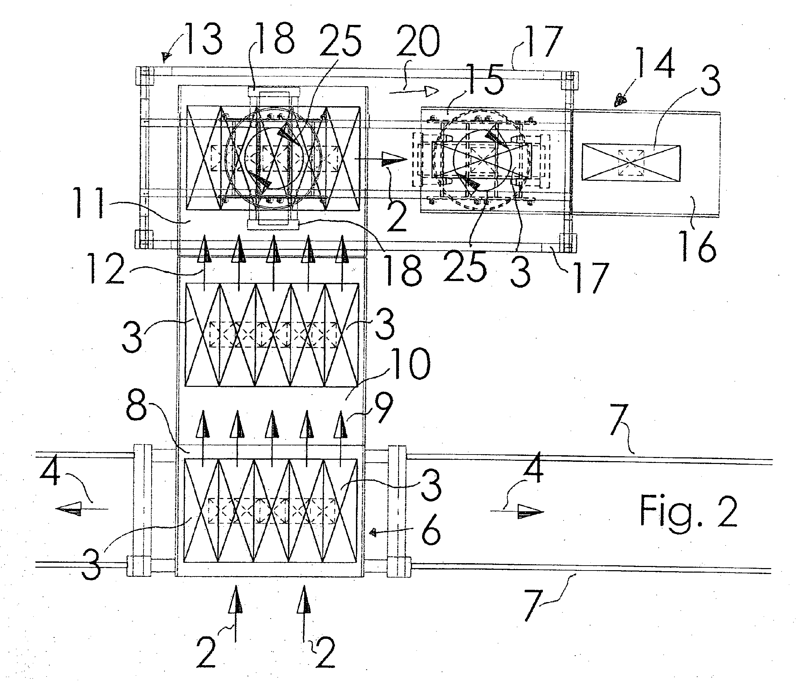

In Fig. 2 ist eine alternative Ausgestaltung derart dargestellt, dass hier die Hebeeinrichtung 13 lediglich nur einen Gutstapel 3 aus der Gruppe in der Zuführeinrichtung 11 anhebt und nach Verfahren auf dem ersten Förderband 15 der Abführeinrichtung 14 absetzt. In dem dargestellten Ausführungsbeispiel weist die Hebeeinrichtung 13 eine Einrichtung zum Drehen des angehobenen Gutstapels 3 auf.

Wie durch die Pfeile 25 angedeutet, kann der bereits angehobene Gutstapel 3 bei Erreichen eines hinreichenden seitlichen Abstandes zu den noch in der Zuführeinrichtung 11 befindlichen Gutstapeln 3 der Gruppe gedreht werden, so dass er beim Absetzen auf dem ersten Förderband 15 der Abführeinrichtung 14 eine andere Ausrichtung aufweist. Nach dem Absetzen werden die beiden Gabelträger 18 mit den jeweils zwei Zinken 19 wieder durch Auseinanderfahren gelöst und zum Aufnehmen des nächsten Gutstapels 3 aus der Gruppe in den Bereich der Zuführeinrichtung 11 zurückbewegt.

Selbstverständlich kann statt der Einrichtung zum Drehen in der Hebeeinrichtung 13 auch beispielsweise das erste Förderband 15 der Abführeinrichtung 14 als Drehtischförderband ausgebildet sein.

Das weitere Transportmedium 10 ist nicht unbedingt erforderlich. Es erleichtert den Abtransport beispielsweise im Falle eines Folienwechsels, da dann der Abtransport der vereinzelten Gutstapel 3 unterbrochen sein kann. In diesem Fall kann eine Gruppe auf dem weiteren Transportmedium 10 zwischengeparkt werden.

In Fig. 2 sind weder die vorgelagerten Zuführlinien 2 noch die sich an die beiden Förderbänder 15, 16 der Abführeinrichtung 14 anschließenden Komponenten dargestellt. Auch die jeweils nachgeschaltete Anlage, in der zumindest die auf der Palette befindlichen Güter mittels einer Folie verpackt wird, ist in beiden Figuren nicht dargestellt.

Das in Fig. 2 dargestellte erste Förderband 15 kann auch als Drehschiebeförderer ausgebildet sein. Da bei einer solchen Ausgestaltung auf dem als Drehschiebeförderer ausgebildeten Förderband 15 ein Gutstapel 3 gedreht und damit seine Ausrichtung geändert werden kann, bedarf es keiner Einrichtung zum Drehen in der Hebeeinrichtung 13.

Sofern kein weiteres Transportmedium 10 benötigt wird, ist die Transporteinrichtung 6 nahe an der Zuführeinrichtung 11 angeordnet, so dass eine komplette Gruppe in unveränderter Richtung von dem Endbereich 5 der Zuführlinie 1, über die Transporteinrichtung 2 zu der Zuführeinrichtung 11 der Übergabestation transportiert werden kann.

## Patentansprüche

1. System zum Abtransport von Gutstapeln (3), die aus Paletten mit darauf gestapelten Gütern, nämlich mit darauf gestapelten Papier- oder Kartonstapeln, bestehen, wobei das System zumindest zwei Zuführlinien (1) für die Gutstapel (3) umfasst, die in eine Transportrichtung (2) laufend ausgebildet und deren Endbereiche (5) seitlich nebeneinander angeordnet sind, und wobei jede Zuführlinie (1) in Transportrichtung (2) gesehen mit Gruppen an Gutstapeln (3) endet, wobei jede Gruppe aus zumindest zwei Gutstapeln (3) besteht, die quer zur Transportrichtung (2) im Endbereich (5) nebeneinander angeordnet sind und wobei die Paletten und/oder die darauf gestapelten Güter zueinander in einem geringen Abstand, insbesondere sich teilweise berührend, angeordnet sind, und zumindest eine Anlage zum jeweils einzelnen Verpacken zumindest der auf den Paletten befindlichen Güter umfasst, wobei eine Transporteinrichtung (6) vorgesehen ist, die in jeweils an die Endbereiche (5) der Zuführlinien (1) angrenzende Positionen für die Übernahme der kompletten Gruppe von dieser Zuführlinie (1) seitlich verfahrbar ist, und dass weiterhin eine Übergabestation vorgesehen ist, die eine Zuführeinrichtung (11), eine Hebeeinrichtung (13) und eine Abführeinrichtung (14) umfasst, wobei die Transporteinrichtung (6) weiterhin zu der Zuführeinrichtung (11) oder zu einem zwischengeschalteten weiteren Transportmedium (10) zur Übergabe der kompletten Gruppe an die Zuführeinrichtung (11) bzw. zur Übergabe an das weitere Transportmedium (10) seitlich verfahrbar ist, und wobei die Hebeeinrichtung (13) für die Übergabe entweder eines Gutstapels (3) einer Gruppe oder gleichzeitig mehrerer, insbesondere aller, Gutstapel (3) einer Gruppe von der Zuführeinrichtung (11) an die Abführeinrichtung (14) ausgebildet ist und wobei für den Fall der Übergabe einer kompletten Gruppe die Abführeinrichtung (14) zwei unabhängig voneinander antreibbare und in einer Linie hintereinander geschaltete Förderbänder (15, 16) umfasst, welche zur Vereinzelung der Paletten unabhängig voneinander steuerbar sind.

2. System nach dem vorhergehenden Anspruch, wobei die Transporteinrichtung (6) entweder als Shuttlewagen mit einem Förderband, dessen Verfahrrichtung (4) fluchtend mit der Transportrichtung (2) der Zuführlinien (1) ausgebildet ist, oder aber als Förderband bzw. als Kran ausgebildet ist.

3. System nach einem der vorhergehenden Ansprüche, wobei das weitere Transportmedium (10) und/oder die Zuführeinrichtung (11) und/oder die Abführeinrichtung (14) und/oder der Endbereich (5) zumindest einer Zuführlinie (1) jeweils als Förderband ausgebildet ist (sind).

4. System nach einem der vorhergehenden Ansprüche, wobei insbesondere für eine Ubergabe einer kompletten Gruppe, das in der generellen Transportrichtung (2) gesehen erste Förderband (15) der Abführeinrichtung (14) als Drehtischförderband oder Drehschiebeförderer ausgebildet ist.

5. System nach einem der vorhergehenden Ansprüche, wobei das in der generellen Transportrichtung (2) gesehen zweite Förderband (16) der Abführeinrichtung (14) als Drehtischförderband ausgebildet ist.

6. System nach einem der vorhergehenden Ansprüche, wobei als Hebeeinrichtung (13) ein, insbesondere auf Schienen (17), verfahrbarer Kran vorgesehen ist.

7. System nach einem der vorhergehenden Ansprüche, wobei die Hebeeinrichtung (13) zumindest einen Gabelträger (18) mit zumindest zwei Zinken (19), die in Eingriff mit der (den) anzuhebenden Palette(n) der Gutstapel (3) bringbar sind, aufweist.

8. System nach einem der vorhergehenden Ansprüche, wobei die Hebeeinrichtung (13) zwei gegenüberliegend angeordnete und aufeinander zu bewegbare Gabelträger (18) aufweist, wobei jeder Gabelträger (18) eine an die Anzahl an anzuhebenden Paletten der Gutstapel (3) angepasste Anzahl an Zinken (19) aufweist und wobei die Zinken (19) der Gabelträger (18) von beiden Seiten in die Paletten eingreifen.

9. System nach einem der vorhergehenden Ansprüche, wobei die Hebeeinrichtung (13) zusätzlich eine Einrichtung zum Drehen eines angehobenen Gutstapels (3) einer Gruppe oder zum gemeinsamen Drehen der aus mehreren, insbesondere allen, angehobenen Gutstapeln (3) einer Gruppe bestehenden Gesamtheit aufweist.

10. System nach einem der Ansprüche 7 bis 9, soweit Anspruch 9 auf die Ansprüche 7 oder 8 rückbezogen ist, wobei die Hebeeinrichtung (13) eine Einrichtung aufweist, die beim Einführen wenigstens eines Zinken (19) eines Gabelträgers (18) eine Kollision mit einem Widerstand detektiert und insbesondere mit einer Steuereinrichtung verbunden ist, welche dazu ausgebildet ist, ein weiteres Einführen des kollidierenden Zinkens (19) oder aller Zinken (19) zu unterbinden und vorzugsweise ein Rückfahren zu initiieren.

11. System nach einem der Ansprüche 7 bis 10, soweit Anspruch 9 auf die Ansprüche 7 oder 8 rückbezogen ist, wobei die Hebeeinrichtung (13) eine Detektionseinrichtung aufweist, die vor oder beim Einführen wenigstens eines Zinkens (19) eines Gabelträgers (18) eine bevorstehende Kollision mittels einer berührungslos arbeitenden Messeinrichtung detektiert und insbesondere mit einer Steuereinrichtung verbunden ist, welche dazu ausgebildet ist, ein Einführen bzw. ein weiteres Einführen des kollidierenden Zinkens oder aller Zinken zu unterbinden und vorzugsweise ein Rückfahren eines bereits teilweise eingeführten Zinkens, der zu kollidieren droht, zu initiieren.

12. System nach einem der Ansprüche 7 bis 11, soweit Anspruch 9 auf die Ansprüche 7 oder 8 rückbezogen ist, wobei zumindest ein Zinken (19) eines Gabelträgers (18) gegen eine in Einführrichtung wirkende Kraft, insbesondere gegen eine Federkraft, bei einer Kollision gegen diese Kraft, insbesondere Federkraft relativ zu dem Gabelträger (18) entgegen der Einführrichtung verlagerbar ausgebildet ist.

13. System nach einem der Ansprüche 7 bis 12, soweit Anspruch 9 auf die Ansprüche 7 oder 8 rückbezogen ist, wobei die Position zumindest einer Zinke (19) zur Anpassung an die anzuhebende Palette horizontal veränderbar ist.

14. Verfahren zum Abtransport von Gutstapeln (3), die aus Paletten mit darauf gestapelten Gütern, nämlich mit darauf gestapelten Papier- oder Kartonstapeln, bestehen, von zumindest zwei Zuführlinien (1) zum Zwecke eines späteren einzelnen Verpackens der Gutstapel (3), wobei die Zuführlinien (1) in eine Transportrichtung (2) laufend ausgebildet und deren Endbereiche (5) seitlich nebeneinander angeordnet sind, und wobei jede Zuführlinie (2) in Transportrichtung (2) gesehen mit Gruppen an Gutstapeln (3) endet, wobei jede Gruppe aus zumindest zwei Gutstapeln (3) besteht, die quer zur Transportrichtung (2) im Endbereich (5) nebeneinander angeordnet sind und wobei die Paletten und/oder die darauf gestapelten Güter zueinander in einem geringen Abstand, insbesondere sich teilweise berührend, angeordnet sind, insbesondere zur Anwendung in einem System nach einem der vorhergehenden Ansprüche, wobei eine Transporteinrichtung (6) vorgesehen ist, die in jeweils an die Endbereiche (5) der Zuführlinien (1) angrenzende Positionen für die Übernahme der kompletten Gruppe von dieser Zuführlinie (1) seitlich verfahren wird, und dort die komplette Gruppe von dieser Zuführlinie (1) übernimmt und dass weiterhin eine Übergabestation vorgesehen ist, die eine Zuführeinrichtung (11), eine Hebeeinrichtung (13) und eine Abführeinrichtung (14) umfasst, wobei die Transporteinrichtung (6) weiterhin zu der Zuführeinrichtung (11) oder zu einem zwischengeschalteten weiteren Transportmedium (10) zur Übergabe der kompletten Gruppe an die Zuführeinrichtung (11) bzw. zur Übergabe an das weitere Transportmedium (10) seitlich verfahren wird und die übernommene Gruppe zu der Zuführeinrichtung (11) der Übergabestation oder zu dem weiteren Transportmedium (10) weiter transportiert wird, wobei die Hebeeinrichtung (13) anschließend entweder einen Gutstapel (3) einer Gruppe oder gleichzeitig mehrere, insbesondere alle, Gutstapel (3) einer Gruppe von der Zuführeinrichtung (11) an die Abführeinrichtung (14) übergibt und wobei für den Fall der Übergabe einer kompletten Gruppe die Abführeinrichtung (14) zwei unabhängig voneinander antreibbare und in einer Linie hintereinander geschaltete Förderbänder (15, 16) umfasst, so dass die Gutstapel (3) der Gruppe vereinzelt werden, indem die komplette Gruppe durch Antreiben beider hintereinander geschalteter Förderbänder (15, 16) solange weitertransportiert wird, bis der erste Gutstapel (3) von dem zweiten Förderband (16) übernommen worden ist und dann die Geschwindigkeit des ersten Förderbandes (15), insbesondere bis zum Stillstand, reduziert wird.

15. Verfahren nach dem vorhergehenden Anspruch, wobei als Transporteinrichtung (6) entweder ein Shuttlewagen mit einem Förderband, dessen Verfahrrichtung (4) fluchtend mit der Transportrichtung (2) der Zuführlinien (1) ausgebildet ist, oder aber ein Förderband bzw. ein Kran verwendet wird.

16. Verfahren nach einem der Ansprüche 14 oder 15, wobei als weiteres Transportmedium (10) und/oder als Zuführeinrichtung (11) und/oder als Abführeinrichtung (14) und/oder als Endbereich (5) zumindest einer Zuführlinie (1) jeweils ein Förderband verwendet wird.

17. Verfahren nach einem der Ansprüche 14 bis 16, wobei insbesondere für die Ubergabe einer kompletten Gruppe als in der generellen Transportrichtung (2) gesehen erstes Förderband (15) der Abführeinrichtung (14) ein Drehtischförderband verwendet wird.

18. Verfahren nach einem der Ansprüche 14 bis 17, wobei als in der generellen Transportrichtung (2) gesehen zweites Förderband (16) der Abführeinrichtung (14) ein Drehtischförderband verwendet wird.

19. Verfahren nach einem der Ansprüche 14 bis 18, wobei eine Hebeeinrichtung (13) eingesetzt wird, die eine Einrichtung aufweist, die beim Einführen wenigstens eines Zinkens (19) eines Gabelträgers (18) eine Kollision mit einem Widerstand detektiert und dass eine mit der Einrichtung verbundene Steuereinrichtung ein weiteres Einführen des kollidierenden Zinkens oder aller Zinken unterbindet und vorzugsweise ein Rückfahren initiiert.

20. Verfahren nach einem der Ansprüche 14 bis 19, wobei eine Hebeeinrichtung (13) eingesetzt wird, die eine Detektionseinrichtung aufweist, die vor oder beim Einführen wenigstens eines Zinkens (19) eines Gabelträgers (18) eine bevorstehende Kollision mittels einer berührungslos arbeitenden Messeinrichtung detektiert und dass eine mit der Detektionseinrichtung verbundene Steuereinrichtung ein Einführen bzw. ein weiteres Einführen des kollidierenden Zinkens (19) oder aller Zinken (19) unterbindet und vorzugsweise ein Rückfahren eines bereits teilweise eingeführten Zinkens (19), der zu kollidieren droht, initiiert.

## Claims

1. System for discharging of piles of merchandise (3), which consist of pallets with goods stacked on them, namely with stacks of paper or cardboard stacked on them, wherein the system comprises at least two feed lines (1) for the piles of merchandise (3), which are configured such as to run in a transport direction (2) and the end regions (5) of which are arranged laterally next to one another, and wherein each feed line (1), seen in the transport direction (2), ends with groups of piles of merchandise (3), wherein each group consists of at least two piles of merchandise (3), which are arranged transverse to the transport direction (2) in the end region (5) next to one another, and wherein the pallets and/or the merchandise stacked on them are arranged at a short distance interval from one another, in particular partially touching, and comprises at least one apparatus for the respective individual packing of at least the merchandise present on the pallets, wherein a transport device (6) is provided, which can be moved laterally in each case into the positions adjacent to the end regions (5) of the feed lines (1) so as to take over the complete group from this feed line (1), and wherein, in addition, a transfer station is provided, which comprises a feed device (11), a lifting device (13), and a discharge device (14), wherein the transport device (6) can be moved further laterally to the feed device (11), or to a further transport medium (10) arranged in between them, for the transfer of the complete group to the feed device (11) or, respectively, for transfer to the further transport medium (10), and wherein the lifting device (13) is configured for the transfer either of a pile of merchandise (3) of a group or simultaneously of several, in particular all, piles of merchandise (3) of a group from the feed device (11) to the discharge device (14), and wherein, for the situation of the transfer of a complete group, the discharge device (14) comprises two conveyor belts (15, 16) which can be driven independently of one another and are arranged in a circuit line behind one another, and which can be controlled independently of one another for the individual separation of the pallets.

2. System according to the preceding claim, wherein the transport device (6) is configured either as a shuttle carriage with a conveyor belt, of which the travel direction (4) is configured as flush with the transport device (2) of the feed lines (1), or is configured as a conveyor belt or as a crane.

3. System according to any one of the preceding claims, wherein the further transport medium (10) and/or the feed device (11) and/or the discharge device (14) and/or the end region (5) of at least one feed line (1) is (are) configured in each case as a conveyor belt.

4. System according to any one of the preceding claims, wherein, in particular for a transfer of a complete group, the first conveyor belt (15), seen in the general transport direction (2), of the discharge device (14) is configured as a rotary table conveyor belt or rotating disk conveyor.

5. System according to any one of the preceding claims, wherein the second conveyor belt (16), seen in the general transport direction (2), of the discharge device (14) is configured as a rotary table conveyor belt.

6. System according to any one of the preceding claims, wherein, as the lifting device (13), a movable crane is provided, in particular movable on rails (17).

7. System according to any one of the preceding claims, wherein the lifting device (13) comprises at least one fork carrier (18) with at least two prongs (19), which can be brought into engagement with the pallet(s) with the piles of merchandise (3) to be lifted.

8. System according to any one of the preceding claims, wherein the lifting device (13) comprises two fork carriers (18) arranged opposite one another and capable of being moved onto one another, wherein each fork carrier (18) comprises a number of prongs (19) adjusted to the number of pallets of the piles of merchandise (3) to be lifted, and wherein the prongs (19) of the fork carrier (18) engage into the pallets from both sides.

9. System according to any one of the preceding claims, wherein the lifting device (13) additionally comprises a device for rotating a raised pile of merchandise (3) of a group or for the common rotation of a totality consisting of several, in particular all, of the piles of merchandise (3) of a group.

10. System according to any one of claims 7 to 9, inasmuch as claim 9 refers back to claim 7 or 8, wherein the lifting device (13) comprises a device which, at the introduction of at least one prong (19) of a fork carrier (18), detects a collision with a source of resistance, and in particular is connected to a control device, which is configured so as to stop a further introduction of the prong (19) involved with the colliding of all the prongs (19), and preferably so as to initiate a withdrawal.

11. System according to any one of claims 7 to 10, inasmuch as claim 9 refers back to claims 7 or 8 wherein the lifting device (13) comprises a detection device, which, before or during the introduction of at least one prong (19) of a fork carrier (18), detects a forthcoming collision by means of a contactless measuring device, and in particular is connected to a control device, which in turn is configured so as to stop an introduction or further introduction of the prong involved with the colliding of all the prongs, and preferably initiates a withdrawal of a prong which has already been partially introduced which threatens to collide.

12. System according to any one of claims 7 to 11, inasmuch as claim 9 refers back to claim 7 or 8, wherein at least one prong (19) of a fork carrier (18) is configured such as to be movable against a force taking effect in the introduction direction, in particular against a spring force, in the event of a collision against this force, and in particular a spring force relative to the fork carrier (18) against the introduction direction.

13. System according to any one of claims 7 to 12, inasmuch as claim 9 refers back to claim 7 or 8, wherein the position of at least one prong (19) can be moved horizontally in order to adjust to the pallet which is to be raised.

14. Method for discharging transport of piles of merchandise (3), which consist of pallets with goods stacked on them, namely with piles of paper or cardboard stacked on them, with at least two feed lines (1) for the purpose of a later individual packing of the piles of merchandise (3), wherein the feed lines (1) are configured so as to run in a transport direction (2), and of which the end regions (5) are arranged laterally next to one another, and wherein each feed line (2), seen in the transport direction (2), ends with groups of piles of merchandise (3), which are arranged transverse to the transport direction (2) next to one another in the end region (5), and wherein the pallets and/or the merchandise (3) piled on them are arranged at a short distance interval from one another, in particular partially touching, in particular for use in a system according to any one of the preceding claims, wherein a transport device (6) is provided, which in each case is moved laterally into positions adjacent to the end regions (5) of the feed lines (1) for taking over the complete group from this feed line (1), and there takes over the complete group from this feed line (1), and that, further, a transfer station is provided, which comprises a feed device (11), a lifting device (13), and a discharge device (14), wherein the transport device (6) is further moved to the feed device (11) or to a further transport medium (10) arranged in between them, for transferring the complete group to the feed device (11) for the transfer to the further transport medium (10), and the group which is taken over is transported further to the feed device (11) of the transfer station or to the further transport medium (10), wherein the lifting device (13) next transfers either a pile of merchandise (3) of a group, or simultaneously several, in particular all, the piles of merchandise (3) of a group from the feed device (11) to the discharge device (14), and wherein, in the case of the transfer of a complete group, the discharge device (14) comprises two conveyor belts (15, 16), capable of being driven independently of one another and are arranged in a line behind one another, such that the piles of merchandise (3) of the group are separated individually, in that the complete group is transported further by the driving of both the conveyor belts (15, 16) arranged behind one another for as long as until the first pile of merchandise (3) has been taken over by the second conveyor belt (16), and then the speed of the first conveyor belt (15) is reduced, in particular as far as to a standstill.

15. Method according to the preceding claim, wherein configured as the transport device (6) is either a shuttle carriage with a conveyor belt, of which the direction of movement (4) is configured as flush with the transport direction (2) of the feed lines (1), or a conveyor belt or crane is used.

16. Method according to any one of claims 14 or 15, wherein, as the further transport medium (10) and/or as a feed device (11) and/or as a discharge device (14) and/or as an end region (5) of at least one feed line (1), use is made in each case of a conveyor belt.

17. Method according to any one of claims 14 to 16, wherein, in particular for the transfer of a complete group, seen in the general direction of transport (2), a first conveyor belt (15) of the discharge device (14) is used as a rotary table conveyor belt.

18. Method according to any one of claims 14 to 17, wherein, seen in the general direction of transport (2), as a second conveyor belt (16) of the discharge device (14) a rotary table conveyor belt is used.

19. Method according to any one of claims 14 to 18, wherein a lifting device (13) is used which comprises a device with which, at the introduction of at least one prong (19) of a fork carrier (18), a collision with a source of resistance is detected, and wherein a control device connected to the said device then stops further introduction of the prong incurring the collision or of all the prongs, and preferably initiates a withdrawal.

20. Method according to any one of claims 14 to 19, wherein a lifting device (13) is used which comprises a detection device, which, before or during the introduction of at least one prong (19) of a fork carrier (18), detects a forthcoming collision by means of a contactless measuring device, and wherein a control device connected to the detection device then stops the introduction or further introduction of the prong (19) incurring the collision or of all the prongs (19), and preferably initiates a withdrawal of a prong (19) which has already been partially introduced or which threatens the incurring of a collision.

## Revendications

1. Système de transport de piles de marchandises (3) composées de palettes comprenant des marchandises empilées sur celles-ci, à savoir des piles de papier ou de carton empilées sur celles-ci, le système comprenant au moins deux lignes d'alimentation (1) pour les piles de marchandises (3) qui sont réalisées de manière à avancer dans une direction de transport (2) et dont les régions d'extrémité (5) sont disposées latéralement l'une à côté de l'autre, et chaque ligne d'alimentation (1) se terminant, vu dans la direction de transport (2), par des groupes de piles de marchandises (3), chaque groupe étant constitué d'au moins deux piles de marchandises (3) qui sont disposées l'une à côté de l'autre transversalement à la direction de transport (2) dans la région d'extrémité (5), et les palettes et/ou les marchandises empilées sur celles-ci étant disposées à faible distance les unes des autres, en particulier avec contact partiel, et comprenant au moins une installation pour l'emballage individuel respectif au moins des marchandises se trouvant sur les palettes,
un dispositif de transport (6) étant prévu, lequel peut être déplacé latéralement dans des positions respectivement adjacentes aux régions d'extrémité (5) des lignes d'alimentation (1) pour la reprise du groupe complet de cette ligne d'alimentation (1), et en ce qu'un poste de transfert est en outre prévu, lequel comprend un dispositif d'alimentation (11), un dispositif de levage (13) et un dispositif d'évacuation (14), le dispositif de transport (6) pouvant en outre être déplacé latéralement vers le dispositif d'alimentation (11) ou un moyen de transport supplémentaire interposé (10) pour le transfert du groupe complet au dispositif d'alimentation (11) ou pour le transfert au moyen de transport supplémentaire (10), et le dispositif de levage (13) étant réalisé pour le transfert soit d'une pile de marchandises (3) d'un groupe soit simultanément de plusieurs piles de marchandises (3), en particulier de toutes les piles de marchandises d'un groupe, depuis le dispositif d'alimentation (11) vers le dispositif d'évacuation (14), et dans le cas du transfert d'un groupe complet, le dispositif d'évacuation (14) comprenant deux bandes transporteuses (15, 16) pouvant être entraînées indépendamment l'une de l'autre et montées en ligne l'une derrière l'autre, lesquelles peuvent être commandées indépendamment l'une de l'autre pour séparer les palettes.

2. Système selon la revendication précédente, dans lequel le dispositif de transport (6) est réalisé soit sous forme de chariot navette avec une bande transporteuse dont la direction de déplacement (4) est réalisée en alignement avec la direction de transport (2) des lignes d'alimentation (1), soit en tant que bande transporteuse ou en tant que grue.

3. Système selon l'une quelconque des revendications précédentes, dans lequel le moyen de transport supplémentaire (10) et/ou le dispositif d'alimentation (11) et/ou le dispositif d'évacuation (14) et/ou la région d'extrémité (5) d'au moins une ligne d'alimentation (1) sont réalisés à chaque fois en tant que bande transporteuse.

4. Système selon l'une quelconque des revendications précédentes, dans lequel, en particulier pour un transfert d'un groupe complet, la première bande transporteuse (15) du dispositif d'évacuation (14), vue dans la direction générale de transport (2), est réalisée sous forme de bande transporteuse à table tournante ou sous forme de transporteur à plaque tournante.

5. Système selon l'une quelconque des revendications précédentes, dans lequel la deuxième bande transporteuse (16) du dispositif d'évacuation (14), vue dans la direction générale de transport (2), est réalisée sous forme de bande transporteuse à table tournante.

6. Système selon l'une quelconque des revendications précédentes, dans lequel on prévoit en tant que dispositif de levage (13) une grue notamment déplaçable sur des rails (17).

7. Système selon l'une quelconque des revendications précédentes, dans lequel le dispositif de levage (13) présente au moins un support à fourche (18) avec au moins deux dents (19) qui peuvent être amenées en prise avec la ou les palettes de la pile de marchandises (3) à soulever.

8. Système selon l'une quelconque des revendications précédentes, dans lequel le dispositif de levage (13) présente deux porte-fourches (18) disposés à l'opposé l'un de l'autre et pouvant être déplacés l'un vers l'autre, chaque porte-fourche (18) présentant un nombre de dents (19) adapté au nombre de palettes de la pile de marchandises (3) à soulever et les dents (19) des porte-fourches (18) s'engageant des deux côtés dans les palettes.

9. Système selon l'une quelconque des revendications précédentes, dans lequel le dispositif de levage (13) présente en outre un dispositif pour faire tourner une pile de marchandises soulevée (3) d'un groupe ou pour faire tourner en commun la totalité constituée de plusieurs, en particulier de toutes les piles de marchandises soulevées (3) d'un groupe.

10. Système selon l'une quelconque des revendications 7 à 9, dans la mesure où la revendication 9 se rapporte à la revendication 7 ou 8, dans lequel le dispositif de levage (13) présente un dispositif qui, lors de l'insertion d'au moins une dent (19) d'un porte-fourche (18), détecte une collision avec une résistance et est en particulier connecté à un dispositif de commande qui est réalisé pour arrêter une insertion supplémentaire de la dent entrant en collision (19) ou de toutes les dents (19), et de préférence pour amorcer une marche arrière.

11. Système selon l'une quelconque des revendications 7 à 10, dans la mesure où la revendication 9 se rapporte à la revendication 7 ou 8, dans lequel le dispositif de levage (13) présente un dispositif de détection qui, avant ou au cours de l'insertion d'au moins une dent (19) d'un porte-fourche (18), détecte une collision imminente au moyen d'un dispositif de mesure fonctionnant sans contact et est notamment connecté à un dispositif de commande qui est réalisé pour arrêter une insertion ou une insertion supplémentaire de la dent entrant en collision ou de toutes les dents, et de préférence pour amorcer une marche arrière d'une dent déjà en partie introduite qui menace d'entrer en collision.

12. Système selon l'une quelconque des revendications 7 à 11, dans la mesure où la revendication 9 se rapporte à la revendication 7 ou 8, dans lequel au moins une dent (19) d'un porte-fourche (18) est réalisée de manière à pouvoir être déplacée dans le sens opposé à la direction d'introduction à l'encontre d'une force agissant dans la direction d'introduction, en particulier à l'encontre d'une force de ressort, en cas de collision à l'encontre de cette force, en particulier de cette force de ressort, par rapport au porte-fourche (18).

13. Système selon l'une quelconque des revendications 7 à 12, dans la mesure où la revendication 9 se rapporte à la revendication 7 ou 8, dans lequel la position d'au moins une dent (19) peut être modifiée horizontalement pour l'adaptation à la palette à soulever.

14. Procédé de transport de piles de marchandises (3) composées de palettes comprenant des marchandises empilées sur celles-ci, à savoir des piles de papier ou de carton empilées sur celles-ci, depuis au moins deux lignes d'alimentation (1) en vue d'un emballage individuel ultérieur des piles de marchandises (3), les lignes d'alimentation (1) étant réalisées de manière à avancer dans une direction de transport (2) et leurs régions d'extrémité (5) étant disposées latéralement l'une à côté de l'autre, et chaque ligne d'alimentation (2), vu dans la direction de transport (2), se terminant par des groupes de piles de marchandises (3), chaque groupe se composant d'au moins deux piles de marchandises (3) qui sont disposées l'une à côté de l'autre transversalement à la direction de transport (2) dans la région d'extrémité (5) et les palettes et/ou les marchandises empilées sur celles-ci étant disposées à faible distance les unes des autres, en particulier avec contact partiel, en particulier prévu pour être mis en œuvre dans un système selon l'une quelconque des revendications précédentes, dans lequel un dispositif de transport (6) est prévu, lequel est déplacé latéralement dans des positions respectivement adjacentes aux régions d'extrémité (5) des lignes d'alimentation (1) pour la reprise du groupe complet de cette ligne d'alimentation (1), et reprend à cet endroit le groupe complet de cette ligne d'alimentation (1), et en ce qu'il est en outre prévu un poste de transfert qui comprend un dispositif d'alimentation (11), un dispositif de levage (13) et un dispositif d'évacuation (14), le dispositif de transport (6) étant en outre déplacé latéralement vers le dispositif d'alimentation (11) ou un moyen de transport supplémentaire interposé (10) pour le transfert du groupe complet au dispositif d'alimentation (11) ou pour le transfert au moyen de transport supplémentaire (10), et le groupe repris étant en outre transporté vers le dispositif d'alimentation (11) du poste de transfert ou vers le moyen de transport supplémentaire (10), le dispositif de levage (13) transférant ensuite soit une pile de marchandises (3) d'un groupe soit simultanément plusieurs piles de marchandises (3), en particulier toutes les piles de marchandises d'un groupe, depuis le dispositif d'alimentation (11) vers le dispositif d'évacuation (14), et dans le cas du transfert d'un groupe complet, le dispositif d'évacuation (14) comprenant deux bandes transporteuses (15, 16) pouvant être entraînées indépendamment l'une de l'autre et montées en ligne l'une derrière l'autre, de telle sorte que les piles de marchandises (3) du groupe soient séparées en continuant de transporter le groupe complet par entraînement des deux bandes transporteuses montées l'une derrière l'autre (15, 16) jusqu'à ce que la première pile de marchandises (3) ait été reprise par la deuxième bande transporteuse (16), la vitesse de la première bande transporteuse (15) étant ensuite réduite, notamment jusqu'à l'arrêt.

15. Procédé selon la revendication précédente, dans lequel on utilise en tant que dispositif de transport (6), soit un chariot navette avec une bande transporteuse dont la direction de déplacement (4) est réalisée en alignement avec la direction de transport (2) des lignes d'alimentation (1), soit une bande transporteuse ou une grue.

16. Procédé selon l'une quelconque des revendications 14 et 15, dans lequel on utilise en tant que moyen de transport supplémentaire (10) et/ou en tant que dispositif d'alimentation (11) et/ou en tant que dispositif d'évacuation (14) et/ou en tant que région d'extrémité (5) d'au moins une ligne d'alimentation (1), à chaque fois une bande transporteuse.

17. Procédé selon l'une quelconque des revendications 14 à 16, dans lequel on utilise, en particulier pour le transfert d'un groupe complet, en tant que première bande transporteuse (15) du dispositif d'évacuation (14), vue dans la direction générale de transport (2), une bande transporteuse à table tournante.

18. Procédé selon l'une quelconque des revendications 14 à 17, dans lequel on utilise, en tant que deuxième bande transporteuse (16) du dispositif d'évacuation (14), vue dans la direction générale de transport (2), une bande transporteuse à table tournante.

19. Procédé selon l'une quelconque des revendications 14 à 18, dans lequel on utilise un dispositif de levage (13) qui présente un dispositif qui, lors de l'insertion d'au moins une dent (19) d'un porte-fourche (18), détecte une collision avec une résistance et en ce qu'un dispositif de commande connecté au dispositif arrête une insertion supplémentaire de la dent entrant en collision ou de toutes les dents et amorce de préférence une marche arrière.

20. Procédé selon l'une quelconque des revendications 14 à 19, dans lequel on utilise un dispositif de levage (13) qui présente un dispositif de détection qui, avant ou au cours de l'insertion d'au moins une dent (19) d'un porte-fourche (18), détecte une collision imminente au moyen d'un dispositif de mesure fonctionnant sans contact et en ce qu'un dispositif de commande connecté au dispositif de détection arrête une insertion ou une insertion supplémentaire de la dent entrant en collision (19) ou de toutes les dents (19), et de préférence amorce une marche arrière d'une dent (19) déjà en partie introduite qui menace d'entrer en collision.
